# EUROPEAN PATENT SPECIFICATION

(11) **EP 2 244 896 B1**
(45) Date of publication and mention of the grant of the patent: **13.04.2016**
(21) Application number: 09711942.4
(22) Date of filing: 20.02.2009
(51) Int. Cl.: B60G 21/055, F16F 1/14, F16F 1/16, F16F 1/36

(54) **VEHICLE STABILIZER**
FAHRZEUGSTABILISATOR
STABILISATEUR DE VÉHICULE

(30) Priority: 21.02.2008 JP 2008040500
(43) Date of publication of application: 03.11.2010
(73) Proprietor: NHK Spring Co., Ltd., Kanagawa 236-0004 (JP); NHK International Corp., Wixom, MI 48393 (US)
(72) Inventor: SUGIURA, Hironobu, Kanagawa 236-0004 (JP); KURODA Shigeru, Kanagawa 236-0004 (JP); KURIMOTO Kiyoshi, Kanagawa 236-0004 (JP); GOTO Yurika, Kanagawa 236-0004 (JP); NISHIZAWA Shinichi, WIXOM, MI 48393 (US)
(74) Representative: Zech, Stefan Markus
(86) International application number: PCT/JP2009/053616
(87) International publication number: WO 2009/104815

(56) References cited:
- EP-A1- 0 597 614
- EP-A1- 0 900 677
- EP-A2- 1 238 750
- WO-A1-2006/126772
- WO-A2-2007/047051
- WO-A2-2007/047051
- DE-A1- 19 912 268
- DE-A1- 19 912 268
- GB-A- 2 239 440
- GB-A- 2 263 250
- GB-A- 2 417 054
- JP-A- 2002 331 326
- JP-A- 2004 034 979
- US-A- 5 190 269
- US-A- 5 224 790
- US-A- 5 588 209
- US-A1- 2003 175 073
- US-A1- 2003 175 073
- US-A1- 2006 082 093

## Description

### Technical Field

The present invention relates to a vehicle stabilizer provided with a stabilizer bar.

### Background Art

A vehicle stabiliser assembly according to the preamble of claim 1 is already described WO 2007/047051 A1 and DE 199 12 268 A1.

WO 2007/047051 A1 relates to stabilizer bars for vehicle suspensions and in particular to a stabilizer bar mounting system that can improve both the mounting of the stabilizer bar to the vehicle frame and the lateral retention of the stabilizer bar. A stabilizer assembly can include a stabilizer bar structure, an intermediate bushing and first and second resilient bushings. The stabilizer bar structure includes a center section to which the intermediate bushing is coupled. The resilient bushing is mounted on the intermediate bushing. The intermediate bushing limits relative axial movement of the resilient bushing in along the center in a first direction and a second direction opposite the first direction.

DE 199 12 268 A1 discloses a stabilizer mounting with an elastic mounting body made of rubber and a mounting ring made of polyurethane. The mounting ring is injection molded onto the outer surface of the stabilizer. The mounting ring has a blocking ring for axially securing the stabilizer. According to a first embodiment, the mounting ring and the mounting body can be rotated. According to an alternative embodiment the mounting ring and mounting body cannot be rotated.

US 2003/0175073 A2 shows a stabilizer bar system with a stabilizer bar. A sleeve comprising resin is molded and placed upon stabilizer bar and has a plurality of grooves that are defined by a plurality of lands. An elastomeric bushing has a corresponding number of grooves and lands formed on its general cylindrical surface so as to allow the elastomeric bushing and sleeve to be axially locked. In an alternative embodiment, interruptions and grooves define a plurality of teeth which define a waffle texture on the outer cylindrical surface of sleeve. The teeth and corresponding teeth formed at surface of elastomeric bushing allow the composite mounting system to be both axially and rotationally locked.

US 2006/0082093 A1 discloses a bushing assembly which includes a bracket and a bushing. The bushing is formed of rubber, elastomeric urethane, or the like. One of the bushings captures an annular ring that is formed on or assembled to the stabilizer bar. The annular ring is formed by heating the stabilizer bar and upsetting the bar in a forming dye. In alternative embodiments there is a bushing which is provided with a concave portion that has a right concave side and a left concave side that engage opposite sides of a spherical surface feature.

US 5,224,790 relates to mount assemblies with slip bushings that are used to mount metal stabilizer bars to automobile frames. An outer sleeve surrounds or at least partially surrounds and engages an inner sleeve. The inner sleeve includes a high friction surface, such as knurling, or even an adhesive engagement of the stabilizer bar. Nuts can be tightened to tighten the clamp member and cause compressive engagement of the bracket with the outer sleeve. An outer surface of inner sleeve is coated with a material which has a low coefficient of friction. In an alternative embodiment, the inner sleeve has a conical surface which expands in one direction only and the hollow of the outer sleeve has a corresponding mating configuration which expand radially along the longitudinal axis. In this instance, the inner sleeve includes a radially outward projecting annular flange at the terminal having the larger radius. This flange serves to inhibit axial movement of the stabilizer bar relative to a clamp assembly.

WO 2006/126772 A1 discloses an apparatus for preventing lateral movement of a balance arm with a support ring which is integrally formed on a circumferential outer surface of a balance arm, which is treated by shot-peening. This apparatus includes a support ring, which is formed on an uneven outer surface of the balance arm by injection molding. One end of the support ring contacts a rubber bushing of a coupling bracket. A plurality of notches is formed around the other end of the support ring. A coating layer is formed on the balance arm such that stepped junctions are formed in the notches of the support ring. Therefore, thanks to friction between the inner surface of the support ring and the uneven outer surface of the balance arm and the stepped junctions of the coating layer, the balance arm is prevented from moving in a lateral direction and, as well, the support arm is prevented from rotating around the balance arm.

US 5,588,209 relates to a method and an apparatus to manufacture stabilizer bars. Accordingly, a vehicle sway bar has two non-metallic components molded directly thereonto at a spacing for interfacing with a vehicle chassis, enabling the bar to be fabricated separately from, rather than during assembly with, the vehicle, comprises producing a bar form from steel rod bent to shape, defining a datum point or feature of the bar beam by which the bar can be located with respect to a reference part of molding apparatus, defining a first portion of the bar, at which a first component, is to be molded, in terms of its distance from the datum feature, arranging the molding apparatus with two molds a distance apart and the first mold a distance from reference part, locating the bar form with the datum feature at the reference part and extending through the molds and molding components onto the first and second portions of the bar form to give sway bar.

GB 2 239 440 A relates to a vehicle anti-roll bar. An automotive stabiliser or anti-roll bar is described with at least one non-metallic stabiliser component, said component comprising at least one element of rubber or plastics material integrally moulded onto the bar.

A vehicle stabilizer provided with a stabilizer bar connects the stabilizer bar to a suspension of a vehicle and stabilizes the attitude of the vehicle by utilizing a reaction force of the stabilizer bar. For example, the vehicle stabilizer is constructed so that opposite ends of the U-shaped stabilizer bar are coupled to operating parts of the suspension, and a torsion part of the stabilizer bar is fixed to a vehicle body by a fixing member and serves to receive a torsional reaction force.

Conventionally, a rubber bush is used for the fixing member to fix the torsion part of the stabilizer bar to the vehicle body frame. Specifically, the rubber bush is provided with a hole portion through which the stabilizer bar is passed and a notch for opening the hole portion. The notch is opened in assembling the rubber bush to the stabilizer, and the rubber bush is attached to the vehicle body frame by means of bolts or the like with the aid of, for example, a U-shaped mounting fixture.

Also known is an example in which a rubber bush is fixed to a stabilizer bar with an adhesive agent or by vulcanization molding or the like. In the case of this rubber bush, no gap is formed between the stabilizer bar and the rubber bush. If a torsional motion acts on the stabilizer bar as the suspension moves up and down, the rubber bush is deformed correspondingly. Thus, functions and effects for the stabilizer can be obtained by the deformation of the rubber bush as well as by a torsional action of the torsion part.

[Patent Document 1] Jpn. Pat. Appln. KOKAI Publication No. 2006-27311

### Disclosure of Invention

### (Problem to be solved by the Invention)

However, the fixing member configured so that the stabilizer bar is passed through the hole portion of the rubber bush and fixed to the frame by means of the mounting fixture cannot fully restrain the movement of the stabilizer bar.

In some cases, therefore, the stabilizer bar may rotate around its axis or move axially with respect to the rubber bush. Thereupon, a noise may be produced by the stabilizer bar and the rubber bush that rub against each other, and the stabilizing effect of the stabilizer may vary.

If the rubber bush is pressed along its thickness by the stabilizer bar, moreover, a force to press the stabilizer bar on the opposite side is reduced, which may reduce the adherence between the rubber bush and the stabilizer bar, and moreover, a gap may open, in some cases. Thereupon, a capillary phenomenon may sometimes act between the rubber bush and the stabilizer bar, which enables water to infiltrate between the stabilizer bar and the rubber bush.

The water that infiltrates into the gap between the stabilizer bar and the rubber bush considerably reduces the frictional resistance of the rubber bush, thereby changing the properties of the stabilizer. If dust or the like that has infiltrated together with water rubs against the rubber bush as the stabilizer operates, moreover, a noise or an unstable behavior may be caused, and a coating on the stabilizer bar may be damaged, thereby causing rusting of the stabilizer bar.

Further, fixing the rubber bush to the stabilizer bar requires, for example, a process for holding them in a heating furnace for a long time and entails a high cost. In replacing the rubber bush, moreover, the rubber bush must be removed from the stabilizer bar by cutting, melting, or some other operation. In addition, a new rubber bush must be fixed to the stabilizer bar with an adhesive agent or by vulcanization molding or the like, thus the replacement of the rubber bush requires much labor.

In some cases, moreover, the bonded rubber bush may be separated from the stabilizer bar. Thereupon, water and dust cause the same trouble as aforementioned, and the functions and effects of the stabilizer vary inevitably. If the separation of the bond occurs irregularly, the stabilizer properties vary between the left and the right side of the stabilizer.

The object of the present invention is to provide a vehicle stabilizer, highly durable, capable of facilitating operations for mounting and replacing rubber bushes, and capable of responding to even a small motion of a suspension.

### (Means for solving the Problem)

In order to solve the above problem, according to the present invention, a vehicle stabilizer assembly is provided with the features according to claim 1. Preferred embodiments of the present invention are subject-matter of claims 2 and 3.

A fixing member for fixing a torsion part of a stabilizer bar of the vehicle stabilizer to a vehicle body is composed of a sheathing provided integrally on an outer surface of the stabilizer bar, a rubber bush disposed on the outer periphery of the sheathing, and a mounting fixture for mounting the rubber bush on the vehicle body so as to cover the outer periphery of the rubber bush. The sheathing and the rubber bush are immovably assembled to each other.

### (Effect of the Invention)

According to the vehicle stabilizer of the present invention, no gap is formed between the stabilizer bar and the sheathing, so that a noise, rusting, a variation in the stabilizer properties, etc., cannot be caused by such a gap. Since the sheathing is held immovable with respect to the rubber bush, the stabilizer cannot be dislocated. A torsional displacement of the stabilizer bar can be absorbed by a deflection of the rubber bush. The elastic force of the rubber bush can be utilized for the functions and effects of the stabilizer, and even a response to a small motion of a suspension without a lateral displacement or rotational displacement can be enabled. Thus, the responsiveness at the initial stage of rolling can be improved, so that the vehicle stability can be enhanced. Further, the rigidity, weight, and cost of the stabilizer can be reduced.

### Brief Description of Drawings

FIG. 1 is a perspective view showing one example of a stabilizer useful for understanding the present invention;
FIG. 2 is a perspective view showing a fixing member of the stabilizer shown in FIG. 1;
FIG. 3 is a perspective view showing a mounting fixture of the stabilizer shown in FIG. 1;
FIG. 4 is a perspective view showing a rubber bush of the stabilizer shown in FIG. 1;
FIG. 5 is a perspective view showing a sheathing of the stabilizer shown in FIG. 1 not forming part of the present invention;
FIG. 6 is a sectional view showing the fixing ^ member of the stabilizer shown in FIG. 1;
FIG. 7 is a perspective view showing a first embodiment of a sheathing according to the present invention;
FIG. 8 is a perspective view showing a second embodiment of a sheathing according to the present invention; and
FIG. 9 is a perspective view showing another example of a fixing member not forming part of the present invention.

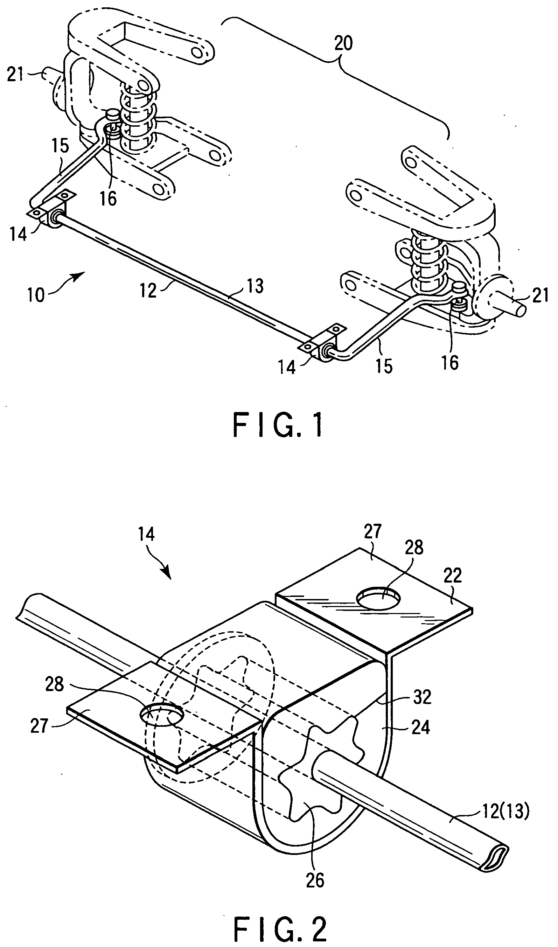

FIG. 1 shows a suspension 20 for front wheels of a vehicle provided with a stabilizer 10. The suspension 20 (indicated by two-dot chain lines) is a double-wishbone suspension. The front wheels and the like (not shown) are mounted on left- and right-hand axle portions 21.

The stabilizer 10 is composed of a stabilizer bar 12, fixing members 14 that fix the stabilizer bar 12 to a vehicle body (not shown), stabilizer links 16 that connect end portions of the stabilizer bar 12 individually to operating parts of the suspension 20, etc.

The stabilizer bar 12 is composed of a torsion part 13 spanning the width of the vehicle body and arm portions 15 individually formed on the opposite ends of the torsion part 13 and which is substantially U-shaped. When the operating parts of the suspension 20 move up and down, the arm portions 15 of the stabilizer bar 12 follow such actions, whereupon the torsion part 13 is twisted so that the suspension 20 is kept stable by its torsional reaction force.

The pair of fixing members 14 are provided individually on the axially opposite ends of the torsion part 13. As shown in FIG. 2, each fixing member 14 is composed of a mounting fixture 22, a rubber bush 24, and a sheathing 26, and is fixed to a frame part (not shown) of the vehicle body.

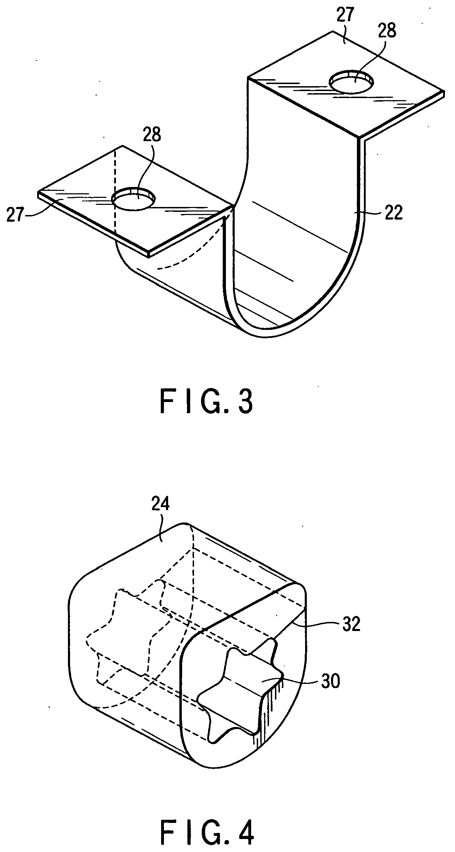

As shown in FIG. 3, the mounting fixture 22 is a substantially U-shaped metal plate, and lugs 27 extend individually sideways from the opposite ends of the fixture 22. A bolt hole 28 is formed in each lug 27. A bolt (not shown) is passed through each bolt hole 28, whereby the mounting fixture 22 is fixed to the frame of the vehicle body.

The rubber bush 24 is formed of a rubber material with a predetermined hardness and has a shape suitable for the U-shape inside the mounting fixture 22. Further, the rubber bush 24 is formed with a through-hole 30 that penetrates the substantial center of the rubber bush 24. The through-hole 30 has an inner surface shape corresponding to the external shape of the sheathing 26. Furthermore, the rubber bush 24 is formed with a cut portion 32 that extends from inside the through-hole 30 to the outer surface of the rubber bush 24. The cut portion 32 in the rubber bush 24 enables the through-hole 30 to open above and below the cut portion 32.

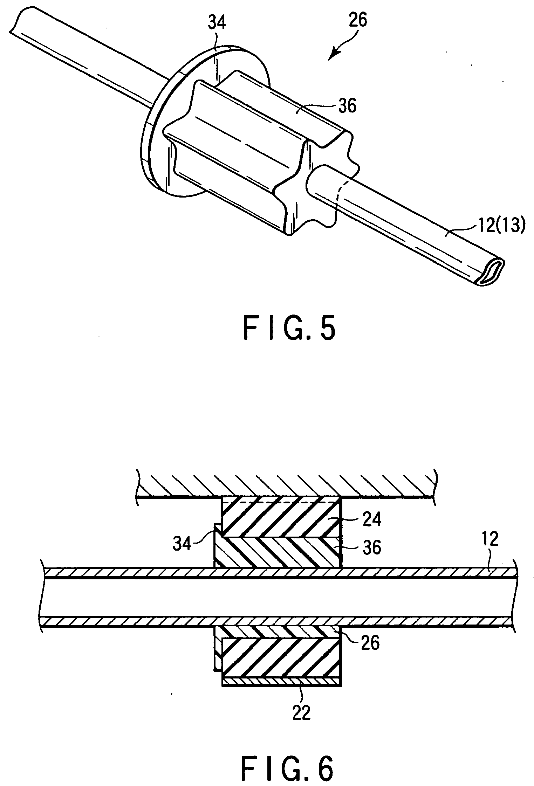

The sheathing 26 is made of a resin and composed of a collar portion 34 and a cylinder portion 36 continuous with the collar portion 34, as shown in FIG. 5. The sheathing 26 is formed by, for example, injection molding and is integrally fixed to the stabilizer bar 12.

The collar portion 34 is a discoid that is formed substantially at right angles to the stabilizer bar 12, as shown in FIG. 6. The cylinder portion 36 is formed substantially parallel to the axis of the stabilizer bar 12 and has a rugged configuration on its outer peripheral surface. The rugged configuration is a point-symmetric shape such that its cross section perpendicular to the central axis of the stabilizer bar 12 has six uniform tops. FIG. 6 is a sectional view of the fixing member 14 taken along a line that passes through the tops and bottoms of the rugged configuration of cylinder portion 36.

Further, the sheathing 26 basically has a sufficient hardness such that it cannot be easily deformed and is fixed in close proximity to the stabilizer bar 12 without a gap. The sheathing 26 is molded after the outer surface of the stabilizer bar 12 is shot-peened and before the outer surface of the stabilizer bar 12 is coated. Fine irregularities are formed on the surface of the stabilizer bar 12 by shot peening, so that the bite of the sheathing 26 on the stabilizer bar 12 is improved by the anchor effect of the irregularities.

The shot peening may be that conventionally performed to improve the durability and the like of the stabilizer bar 12. Further, any other processing means may be used for the purpose as long as the bite of the resin on the stabilizer bar 12 can be improved. Depending on the type of the resin, furthermore, the sheathing 26 may be molded on the stabilizer bar 12 with a smooth surface provided that the resin of the sheathing 26 and the stabilizer bar 12 to be combined are fully fixed. If the adhesion of the resin to the stabilizer bar 12 is unsatisfactory, in contrast with this, a molded portion of the sheathing 26 may additionally be knurled or serrated after being shot-peened.

Further, the rubber bush 24 has an external shape larger than the internal shape of the mounting fixture 22, and the through-hole 30 is formed with a shape smaller than the external shape of the cylinder portion 36 of the sheathing 26. Thus, if the mounting fixture 22 is fitted on the outside of the rubber bush 24, which is mounted on the sheathing 26, and fixed to the vehicle body frame, the rubber bush 24 is pressed inward by both the sheathing 26 and the mounting fixture 22. Accordingly, the fixing member 14 that is fixed to the vehicle body frame is kept in a state such that a compressive force (preload) is continually applied to the inside of the rubber bush 24. Preferably, the preload should be set to a sufficiently large value such that it cannot be reduced to zero when the stabilizer 10 operates.

The through-hole 30 may be formed with a shape equal to or larger than the external shape of the sheathing 26. Also in this case, the through-hole 30 is formed so that the sheathing 26 is pressed inward and subjected to a compressive force by the rubber bush 24 when the rubber bush 24 is attached to the mounting fixture 22.

The following is a description of functions and effects of the stabilizer 10.

Since the sheathing 26 is formed on the surface of the stabilizer bar 12 by injection molding, the stabilizer bar 12 and the sheathing 26 closely contact each other, thereby preventing water or dust from infiltrating or adhering between them. Accordingly, the surface of the stabilizer bar 12 between the stabilizer bar 12 and the sheathing 26 can be prevented from rusting, so that its durability can be improved. Since the sheathing 26 and the stabilizer bar 12 cannot be dislocated from each other, moreover, no noise can be produced.

Since the sheathing 26 is formed on the stabilizer bar 12 by injection molding, it can be provided with ease. Further, the sheathing 26 can be securely fixed to the stabilizer bar 12 by the shot peening for the stabilizer bar 12 before molding without requiring any special processing before the injection molding. Thus, the time required for labor and processing can be shortened, so that the manufacturing cost can be reduced considerably, as compared with the case where a conventional rubber bush is adhesively bonded or vulcanization-molded.

The rubber bush 24 can be opened at its cut portion 32 and assembled to the sheathing 26, so that the stabilizer bar 12 can be easily attached to the vehicle body frame. Since the rubber bush 24 and the sheathing 26 are not adhesively bonded, moreover, the rubber bush 24 can be easily removed from the sheathing 26. Thus, the rubber bush 24 can be replaced by a simple operation, so that the replacement cost can be reduced.

Since the sheathing 26 is in close contact with the rubber bush 24, the stabilizer effect can be fully exhibited. Let it be supposed that a wheel on one side drops into a depression so that one side of the suspension 20 lowers while the vehicle is running. Thereupon, an angle is formed or extended between the left- and right-hand arm portions 15, which twists the torsion part 13 and produces a reaction force. As the arm portions 15 then rock, the sheathings 26 are also rotated around their respective axes, so that the cylinder portions 36 rotate, thereby compressing the rubber material of the rubber bushes 24 between the tops of the cylinder portions 36 in the rotating direction of the stabilizer bar 12. Thereupon, the compressive reaction force of the rubber bushes 24 is transmitted to the arm portions 15, whereby the responsiveness at the initial stage of rolling is improved, so that the driving stability of the vehicle is enhanced.

Since the faculty of the stabilizer can be partially allocated to the rubber bushes 24 with the sheathings 26 fixed to the stabilizer bar 12, the rigidity and spring constant of the stabilizer bar 12 can be reduced. Thus, the stabilizer 10 can be reduced in weight and cost.

The sheathing 26 may be fixed to the stabilizer bar 12 by adhesive bonding or welding instead of injection molding. Although the sheathing 26 should preferably be formed of a resin, moreover, it may alternatively be formed of another material, e.g., hard rubber, synthetic rubber, etc.

The following is a description of a first embodiment of the invention.

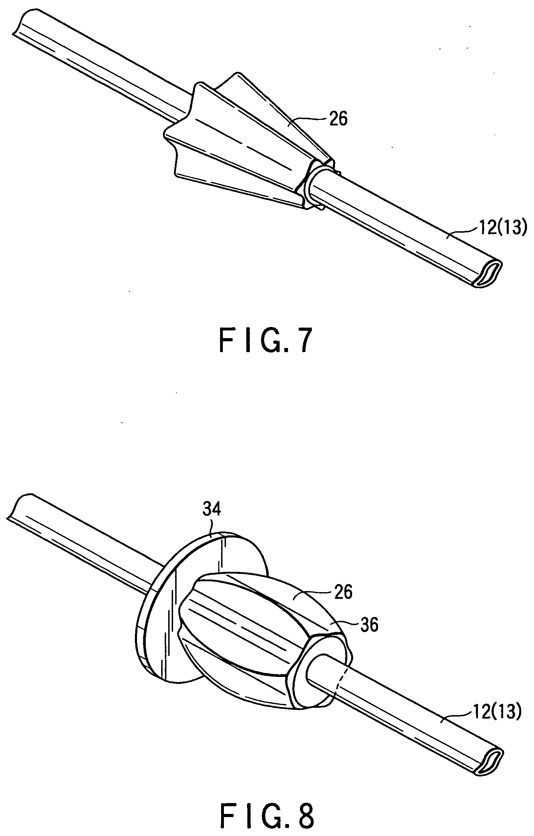

FIG. 7 shows a sheathing 26. In this example, the sheathing 26 has an axially rugged configuration on its outer peripheral surface. It is formed so as not to be circumferentially dislocated from a rubber bush 24 and is axially tapered on one side. Further, a rugged configuration for integral assembly is formed on the inner surface of a through-hole 30 of the rubber bush 24 so as to correspond to the rugged configuration of the sheathing 26.

When the sheathing 26 formed in this manner is assembled to the rubber bush 24, the sheathing 26 is prevented from rotating circumferentially and from moving axially in a direction in which the diameter of the sheathing 26 increases. Thus, in the stabilizer 10 in which such sheathings 26 are bilaterally molded on a stabilizer bar 12, fixing members 14 can prevent the stabilizer bar 12 from rotating around the axis and moving axially, so that the same effect as aforementioned can be exhibited.

Further, FIG. 8 shows a second embodiment of the invention. In this embodiment, each top part of a cylinder portion 36 has a convex shape in cross-section when cut along a plane that passes through the central axis of a stabilizer bar 12. If a sheathing 26 formed in this manner is assembled to a rubber bush 24 that has a through-hole 30 corresponding to this rugged configuration, circumferential dislocation can be restrained by the top parts. Since the top parts are convex with respect to the axial direction, moreover, an axial movement can also be restrained. In this example, each top part of the cylinder portion 36 may have a concave shape, depressed in the center, instead of being convex.

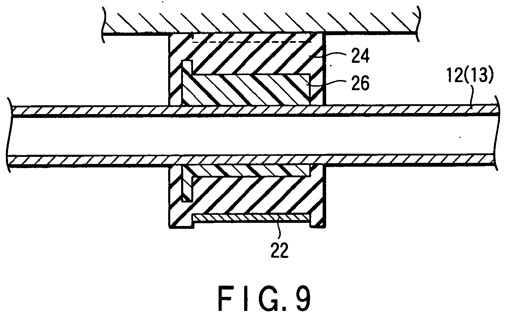

FIG. 9 shows an example in which the transverse width of a rubber bush 24 is longer than that of a sheathing 26 along the axis of a stabilizer bar 12. Thus, the sheathing 26 covers the inside of the rubber bush 24 so that water, dust, etc., can be prevented from infiltrating between the rubber bush 24 and the sheathing 26. Further, the sheathing 26 may be formed so that its axial width is longer than that of the rubber bush 24 along the stabilizer bar 12, that is, the sheathing 26 is exposed on the opposite sides of the rubber bush 24.

Although the sheathing 26 is formed axially with the stabilizer bar 12 in the example described above, they need not always be coaxial with each other. Further, the cross section of the stabilizer bar 12 may be of any desired shape other than a circular shape and may be either hollow or solid. Although the fixing member 14 is provided on the frame of the vehicle body, the distal end of the arm portion may be attached to the frame.

The sheathing 26 should only be formed with one irregularity provided that the rubber bush 24 and the sheathing 26 can engage each other at least circumferentially. The collar portion 34 may be formed in any desired position along the axis, e.g., in the center of the sheathing 26, instead of being formed on the axial end portion of the sheathing 26.

The outer surface of the sheathing 26 and the inner surface of the rubber bush 24 need not be in close contact with each other throughout the circumference of the sheathing 26. Further, the sheathing 26 and the rubber bush 24 may be configured so that a gap is formed between them when the stabilizer 10 is driven to twist the stabilizer bar 12.

Furthermore, the sheathing 26 may be provided with a projection member that is configured to be inserted through the inner surface of the rubber bush 24. Specifically, the projection member may be inserted into a crack that is formed in the inner wall surface of the through-hole 30 of the rubber bush 24 by the projection member. Alternatively, a plurality of projections may be formed on the surface of the sheathing 26 and caused to engage with the inner surface of the through-hole 30 of the rubber bush 24.

The rubber bush 24 may be attached to the sheathing 26 through the axial end of the stabilizer bar 12 without being formed with the cut portion 32.

The mounting fixture 22 may be fitted into a hollow that is formed in the outer peripheral surface of the rubber bush 24. If this is done, the rubber bush 24 can be prevented from being disengaged from the mounting fixture 22 even when the rubber bush 24 is subjected to a force along the axis of the stabilizer bar 12.

### Industrial Applicability

The present invention is applicable to a vehicle stabilizer.

## Claims

1. A vehicle stabilizer assembly (10) comprising a stabilizer bar (12), and a fixing member (14) including:
a sheathing (26) provided integrally on an outer surface of the stabilizer bar (12);
a rubber bush (24) disposed on the outer periphery of the sheathing (26); and
a mounting fixture (22) attached to a vehicle body in such a manner as to cover the outer periphery of the rubber bush (24); and
the fixing member (14) fixes a torsion part (13) of the stabilizer bar (12) to the vehicle body and immovably assembles the sheathing (26) and the rubber bush (24) to each other,
the sheathing (26) has an outer surface on which a rugged configuration including irregularities along the circumference of the stabilizer bar (12) is formed;
the rubber bush (24) is provided with a through-hole (30) having an inner surface shape corresponding to the rugged configuration; and
the rugged configuration permits the sheathing (26) and the rubber bush (24) to be assembled so as not to be movable relative to each other along the circumference of the stabilizer bar (12),
**characterized in that**:
an outer surface of the sheathing (26) is concaved, convexed, or tapered along an axis of the stabilizer bar (12), the rubber bush (24) is provided with a through-hole (30) having an inner surface shape corresponding to the concave, convex, or tapered shape, and the sheathing (26) and the rubber bush (24) are assembled so as not to be movable relatively to each other in at least one direction along the axis of the stabilizer bar (12) by the concave, convex, or tapered shape.

2. A vehicle stabilizer assembly (10) according to claim 1,
**characterized in that**
the sheathing (26) is provided with a collar portion (34) extending radially of the stabilizer bar (12), and the sheathing (26) and the rubber bush (24) are assembled so as not to be movable relatively to each other in at least one direction along an axis of the stabilizer bar (12) with the rubber bush (24) in engagement with the collar portion (34).

3. A vehicle stabilizer assembly (10) according to claim 1 or 2,
**characterized in that**
the sheathing (26) is provided by injection molding on the stabilizer bar which is shot-peened before a coating process.

## Patentansprüche

1. Fahrzeugstabilisatoranordnung (10), aufweisend eine Stabilisatorstange (12) und
ein Fixierungsteil (14) mit
einer Umhüllung (26), die integral an einer Außenfläche der Stabilisatorstange (12) vorgesehen ist;
eine Gummitülle (24), die am Außenumfang der Umhüllung (26) angeordnet ist, und
eine Montagebefestigung (22), die so an der Fahrzeugkarosserie befestigt ist, dass der Außenumfang der Gummitülle (24) bedeckt ist; und
das Fixierungsteil (14) ein Torsionsteil (13) der Stabilisatorstange (12) am Fahrzeugkörper fixiert und die Umhüllung (26) und die Gummitülle (24) unbeweglich aneinander montiert,
die Umhüllung (26) eine Außenfläche hat, auf der eine gewellte Gestaltung mit Unregelmäßigkeiten entlang des Umfangs der Stabilisatorstange (12) ausgebildet ist;
die Gummitülle (24) mit einer Durchgangsöffnung (30) versehen ist, die eine der gewellten Gestaltung entsprechende Innenflächenform hat; und
es die gewellte Gestaltung der Umhüllung (26) und der Gummitülle (24) erlaubt, so zusammengesetzt zu werden, dass sie entlang des Umfangs der Stabilisatorstange (12) in Bezug aufeinander nicht beweglich sind,
**dadurch gekennzeichnet, dass**
die Außenfläche der Umhüllung (26) entlang einer Achse der Stabilisatorstange (12) konkav, konvex oder sich verjüngend ausgebildet ist, die Gummitülle (24) mit einer Durchgangsöffnung (30) versehen ist, die eine der konkaven, konvexen oder sich verjüngenden Form entsprechende Innenflächenform hat, und die Umhüllung (26) und die Gummitülle (24) so zusammengesetzt sind, dass sie durch die konkave, konvexe oder sich verjüngende Form in mindestens einer Richtung entlang der Achse der Stabilisatorstange (12) in Bezug aufeinander nicht beweglich sind.

2. Fahrzeugstabilisatoranordnung (10) nach Anspruch 1,
**dadurch gekennzeichnet, dass**
die Umhüllung (26) mit einem Ansatzabschnitt (34) versehen ist, der sich radial von der Stabilisatorstange (12) erstreckt, und die Umhüllung (26) und die Gummitülle (24) so zusammengesetzt sind, dass sie mindestens einer Richtung entlang der Achse der Stabilisatorstange (12) in Bezug aufeinander nicht beweglich sind, wenn die Gummitülle (24) mit dem Ansatzabschnitt (34) in Eingriff ist.

3. Fahrzeugstabilisatoranordnung (10) nach Anspruch 1 oder 2,
**dadurch gekennzeichnet, dass**
die Umhüllung (26) durch Spritzgießen an der Stabilisatorstange bereitgestellt wird, die vor einem Beschichtungsprozess kugelgestrahlt wird.

## Revendications

1. Ensemble de stabilisateur (10) de véhicule comprenant une barre stabilisatrice (12), et un élément de fixation (14) comprenant :
un revêtement (26) recouvrant intégralement sur une surface extérieure de la barre stabilisatrice (12) ;
une bague en caoutchouc (24) disposée sur la périphérie extérieure du revêtement (26) ; et
une fixation de montage (22) reliée à une carrosserie de véhicule de façon à couvrir la périphérie extérieure de la bague en caoutchouc (24) ; et
l'élément de fixation (14) fixe une partie de torsion (13) de la barre stabilisatrice (12) à la carrosserie de véhicule et relie l'un à l'autre, de manière immobile, le revêtement (26) et la bague en caoutchouc (24),
le revêtement (26) comporte une surface extérieure sur laquelle est formée une configuration à aspérités comprenant des irrégularités sur la circonférence de la barre stabilisatrice (12) ;
la bague en caoutchouc (24) est pourvue d'un trou traversant (30) ayant une forme de surface intérieure correspondant à la configuration à aspérités ; et
la configuration à aspérités permet d'assembler le revêtement (26) et la bague en caoutchouc (24) de façon à les immobiliser l'un par rapport sur la circonférence de la barre stabilisatrice (12),
**caractérisé en ce que** :
une surface extérieure du revêtement (26) est concave, convexe, ou biseautée suivant un axe de la barre stabilisatrice (12), la bague en caoutchouc (24) est pourvue d'un trou traversant (30) ayant une forme de surface intérieure correspondant à la forme concave, convexe ou biseautée, et le revêtement (26) et la bague en caoutchouc (24) sont assemblés de façon à être immobiles l'un par rapport à l'autre dans au moins un sens suivant l'axe de la barre stabilisatrice (12) du fait de la forme concave, convexe ou biseautée.

2. Ensemble stabilisateur (10) de véhicule selon la revendication 1,
**caractérisé en ce que**
le revêtement (26) est pourvu d'une partie collerette (34) s'étendant radialement par rapport à la barre stabilisatrice (12), et le revêtement (26) et la bague en caoutchouc (24) sont assemblés de façon à être immobiles l'un par rapport à l'autre dans au moins un sens suivant un axe de la barre stabilisatrice (12), la bague en caoutchouc (24) étant en contact avec la partie collerette (34).

3. Ensemble stabilisateur (10) de véhicule selon la revendication 1 ou 2,
**caractérisé en ce que**
le revêtement (26) est réalisé par moulage par injection sur la barre stabilisatrice qui est grenaillée avant un traitement de revêtement.
